# EUROPEAN PATENT APPLICATION

(11) **EP 1 759 901 A2**
(43) Date of publication of application: **07.03.2007**
(21) Application number: 06018535.2
(22) Date of filing: 05.09.2006
(51) Int. Cl.: B60J 1/02, B60J 10/02, B60J 10/00

(54) **Window glass for vehicle, and attachment structure of electronic tag**

(30) Priority: 06.09.2005 JP 2005258521
(71) Applicant: Nippon Sheet Glass Company, Limited, Tokyo 105-8552 (JP)
(72) Inventor: Kokuryo, Kazuto, c/o Zenic Inc., 520-2144 (JP); Ohara, Shohei, c/o Nippon sheet Glass Co. Limited, Tokyo 105-8552 (JP)
(74) Representative: HOFFMANN EITLE

(57) **Abstract**

A window glass (10) for a vehicle (20) is attached and fixed to a window frame (22) with adhesive (30) therebetween in a state where predetermined spacing is kept by a holding member (18). An electronic tag (40) is mounted on a vehicle interior surface of the window glass for a vehicle located between the end of the window glass for a vehicle and the holding member (18) by adhesive, etc, and the electronic tag is embedded in the adhesive in a state where the window glass for a vehicle is attached to the window frame.

## Description

### BACKGROUND OF THE INVENTION

The present invention relates to a window glass for a vehicle having an electronic tag including the function that transmits identifying signals, or the structure of a vehicle to which an electronic tag is attached.

### 2. Related Art

In recent years, management technologies making a use of electronic tags (also referred to as RFID (Radio Frequency Identification) tags) are becoming widespread. An electronic tag is used in a state where it is stuck on the surface of an article with adhesive or double-sided tape. As the electronic tag, an electronic tag that is attached to small things like parcels and consumers' durables like automobiles or domestic building materials to acquire and utilize various kinds of information by wireless transmission is proposed.

For example, JP-A-2004-326573 discloses an automobile management system in which an electronic tag having individual identification information written therein is mounted to an automobile, and the automobile is managed using this identification information.

In a case where the electronic tag is attached to an administration object, for example, an automobile, like the system disclosed in JP-A-2004-326573, if the electronic tag is stuck on the surface of a heavy object, handling thereof is easy. However, there is a possibility that the electronic tag may be detached easily from the surface of a vehicle body, and may be exchanged with another electronic tag by a malicious person. Further, it may also be considered that the electronic tag is damaged on account of an external factor.

In order to make the electronic tag invisible, it is desirable that the electronic tag is enclosed in the vehicle body. However, in a case where the electronic tag is enclosed in the vehicle body, there is a possibility that the radio waves to be received by the electronic tag with a metallic part that constitutes the vehicle body may be intercepted, and thus the identification information written in the electronic tag cannot be read.

In order to avoid these problems, it is desirable that the electronic tag is stuck on a member inside a vehicle, for example, the top surface of a dashboard. However, in a case where the electronic tag is stuck on a member inside a vehicle, the electronic tag can be seen through a front glass from the outside of the vehicle and directly from a passenger inside the vehicle, there is a possibility that the appearance of the automobile may be deteriorated.

### SUMMARY OF THE INVENTION

The invention has been made in consideration of the above problems. It is therefore an object of the invention to attach an electronic tag to a position where appearance and function is spoiled as little as possible.

An aspect of the invention is a window glass for a vehicle. This window glass for a vehicle is a window glass for a vehicle attached to a window frame of the vehicle with adhesive. An electronic tag is mounted on a joint region with the window frame. Here, the joint region with the window frame is a region between the window glass for a vehicle and the window frame, and is a region where the electronic tag is located on the back side of the window frame when viewed from the inside of the vehicle.

According to this aspect, the electronic tag is communicable with the outside via the window glass for a vehicle, and the function of the electronic tag is hardly damaged. Further, since the electronic tag is located on the back side of the window frame when viewed from the inside of the vehicle, the electronic tag is not directly seen from a passenger in the vehicle, and thus the appearance of the vehicle is not deteriorated.

In the above aspect, the electronic tag may be provided in a region where the adhesive is provided. Further, in the above aspect, the window glass for a vehicle may further include a holding member that keeps a gap with the window frame at a predetermined distance, and the electronic tag may be mounted either in the holding member or on the side face thereof.

Another aspect of this invention is an attachment structure of an electronic tag. The attachment structure of an electronic tag includes a window frame of a vehicle, a window glass for a vehicle attached to the window frame, adhesive that bonds the window frame and the window glass for a vehicle together, and an electronic tag provided in a joint region between the window frame and the window glass for a vehicle.

In the above aspect, the electronic tag may be provided in the adhesive. Further, in the above aspect, the window glass for a vehicle may further include a holding member that keeps a gap between the window frame and the window glass for a vehicle at a predetermined distance, and the electronic tag may be mounted either in the holding member or on the side face thereof.

In addition, suitable combinations of the above-mentioned respective elements will also be included in the scope of the invention that requires a protection of a patent according to this patent application.

According to the invention, the electronic tag is communicable with the outside via the window glass for a vehicle, and the function of the electronic tag is hardly spoiled. Further, since the electronic tag is located on the back side of the window frame when viewed from the inside of the vehicle, the electronic tag is not directly seen from a passenger in the vehicle, and thus the appearance of the vehicle is not deteriorated.

### BRIEF DESCRIPTION OF THE DRAWINGS

Fig. 1 is a perspective view showing the outline of a window glass for a vehicle according to Embodiment 1.
Fig. 2 is a sectional view taken along line A-A' of Fig. 1.
Fig. 3 shows the appearance of an electronic tag used in Embodiment 1: Fig. 3A, is a plan view of the electronic tag; Fig. 3B is a front view of the electronic tag; and Fig. 3C is a side view of the electronic tag.
Fig. 4 is a block diagram showing the functional configuration of a semiconductor chip that constitutes the electronic tag used in Embodiment 1.
Fig. 5 is a sectional view showing the outline of a window glass for a vehicle according to Embodiment 2.
Fig. 6 is a sectional view showing the outline of a window glass for a vehicle according to Embodiment 3.
Fig. 7 is a sectional view showing the outline of a window glass for a vehicle according to Modification 1.
Fig. 8 is a sectional view showing the outline of a window glass for a vehicle according to Modification 2.

### DETAILED DESCRIPTION OF THE PREFERRED EMBODIMENTS

Hereinafter, embodiments of the invention will be described with reference to the accompanying drawings.

### (Embodiment 1)

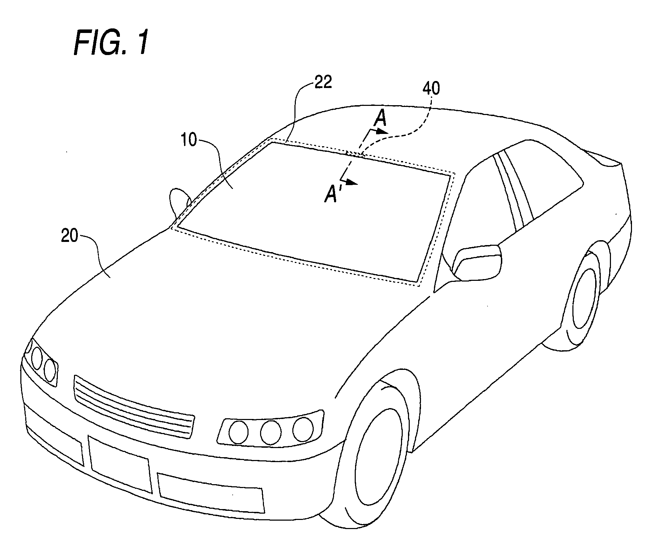

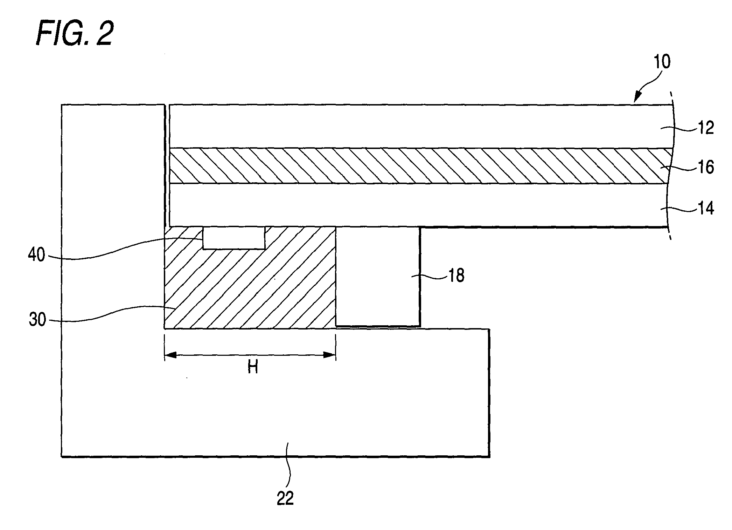

Fig. 1 is a perspective view showing the outline of a window glass 10 for a vehicle according to Embodiment 1. Fig. 2 is a sectional view taken along line A-A' of Fig. 1.

The window glass 10 for a vehicle of this embodiment is a front glass for a vehicle 20. The window glass 10 for a vehicle is attached and fixed to a window frame 22 provided in a front part of the vehicle 20. The window glass 10 for a vehicle is a so-called shatterproof glass in which an interlayer film 16 is sandwiched between a sheet glass 12 outside the vehicle and a sheet glass 14 inside the vehicle and stuck on thereto by thermal compression. The interlayer film 16 is made of tough resin, for example, Poly Vinyl Butyral (PVB), or the like. In the shatterproof glass, the two sheet glasses 12 and 14 are bonded together with high strength with the interlayer film 16 therebetween. Therefore, glass pieces are hardly scattered when the glass is broken.

A holding member 18 called a dam is bonded along a peripheral edge of the window glass 10 for a vehicle. The holding member 18 seals adhesive 30, and keeps the distance between the window glass 10 for a vehicle and the window frame 22 at a predetermined spacing.

The window glass 10 for a vehicle and the window frame 22 are attached together with the adhesive 30, such as urethane, therebetween. A space formed by the window glass 10 for a vehicle, the window frame 22, and the holding member 18 is filled up with the adhesive 30. Although this embodiment illustrates that an end of the window glass 10 for a vehicle is in a bare state, molding may be provided at the end of the window glass 10 for a vehicle.

An electronic tag 40 is mounted on a vehicle interior surface of the window glass 10 for a vehicle located between the end of the window glass 10 for a vehicle and the holding member 18 by adhesive, etc. Accordingly, with the window glass 10 for a vehicle attached to the window frame 22, the electronic tag 40 is embedded in the adhesive 30. Since the width H of the adhesive 30 generally is about 20 mm, it is difficult to make the longitudinal direction of the electronic tag 40 orthogonal to the direction of the peripheral edge of the window glass 10 for a vehicle. Accordingly, the longitudinal direction of the electronic tag 40 turns to the direction of the peripheral edge of the window glass 10 for a vehicle.

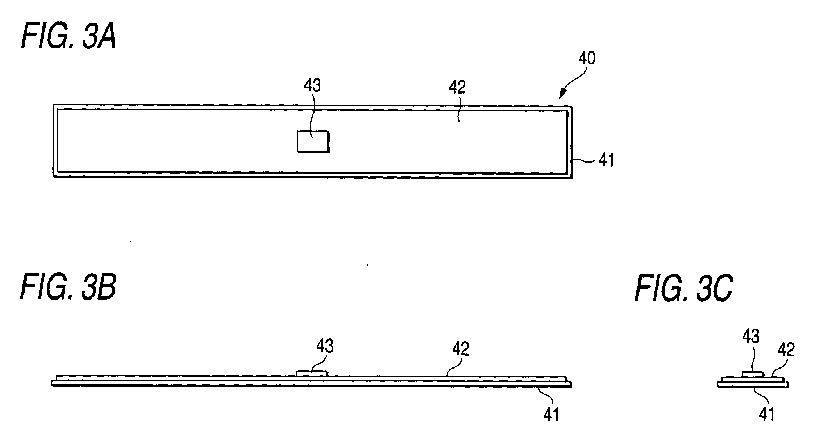

The electronic tag 40 transmits the identification information recorded therein as a reply to a request from the outside by wireless communication. Figs. 3A to Fig. 3C show the appearance of the electronic tag 40. Fig. 3A is a plan view of the electronic tag 40, Fig. 3B is a front view of the electronic tag 40, and Fig. 3C is a side view of the electronic tag 40. The electronic tag 40 includes a strip-like insulation film 41, an antenna 42 that is formed on one surface of the insulation film 41 to transmit and receive radio waves, such as microwaves, and a semiconductor chip 43 as a wireless chip that is connected to the antenna 42 to transmit predetermined data as a reply to a request from the outside by the wireless communication via the antenna 42.

The electronic tag 40 is adapted to be able to make data stored in a memory circuit within the semiconductor chip 43 and to read this data in a non-contact manner by radio waves, such as microwaves or UHF waves. Therefore, the electronic tag 40 can record the data that generally has large volume compared with bar codes, two-dimensional bar codes, etc. Further, since the electron tag is not prints unlike bar codes, two-dimensional bar codes, etc., alteration of data is also difficult.

The antenna 42 is formed by coating a conductive material, for example, conductive paste using copper or silver as its principal constituent on the insulation film 41 made of resin. The antenna 42 is designed to be able to efficiently transmit and receive radio waves having a specific frequency, for example, microwaves of 2.45 GHz. Although the shape of the antenna is, for example, a loop shape, it may be other shapes.

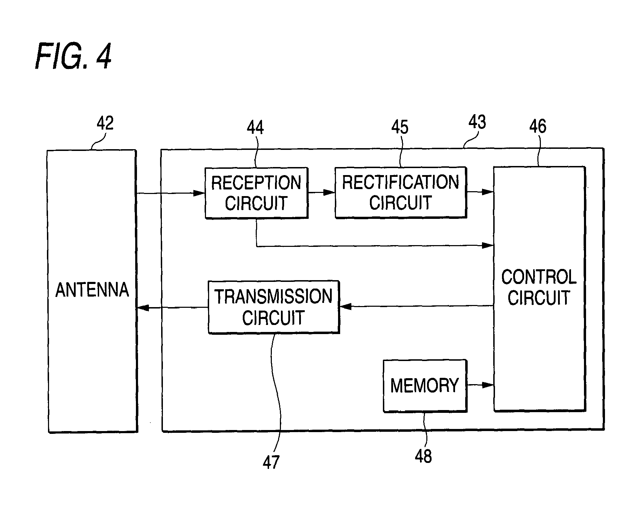

The semiconductor chip 43 is manufactured by, for example, forming a circuit as shown in a functional block diagram of Fig. 4 to be described below on a single crystal silicon substrate. Since a thin antenna 42 is formed on one surface of the insulation film 41, the electronic tag 40 is thin and pliable.

The semiconductor chip 43 is a so-called passive semiconductor chip to be driven using the electromotive force caused by the radio waves received from the outside. Since such a passive wireless chip can be made smaller by the portion that has no built-in power source than an active wireless chip having a power source, even if the passive wireless chip is provided in an article whose appearance is considered important, such as the window glass 10 for a vehicle, it hardly damage the appearance of the article.

Fig. 4 is a block diagram showing the functional configuration of the semiconductor chip 43. The semiconductor chip 43 includes a reception circuit 44, a rectification circuit 45, a control circuit 46, a transmission circuit 47, and a nonvolatile memory 48. The reception circuit 44 outputs the radio waves received by the antenna 42 to the rectifying circuit 45 and creates clock signals from the radio waves received by the antenna 42 to output the clock signals to the control circuit 46. The rectification circuit 45 rectifies the radio waves transmitted from the reception circuit 44, transforms the rectified signals into the electric power to be a driving source of the control circuit 46, and outputs the electric power to the control circuit 46.

When a clock signal is input from the reception circuit 44, the control circuit 46 will extract predetermined data from the memory 48, and will output the information signals according to this data along with transmission signals to the transmission circuit 47. The transmission circuit 47 modulates the transmission signals input from the control circuit 46 along together with the information signals, and transmits the modulated signals to the outside via the antenna 42. The transmitted signals are received by a reader (not shown) installed outside.

Various kinds of data can also be stored in the memory 48 as well as at least a unique identification number is written in the memory. Wireless transmission of this identification number can be used for management of the window glass 10 for a vehicle provided with the electronic tag 40. Examples of the data to be stored in the memory 48 include manufacture-related attributes, such as the manufacturing number, production time, produced place, production process, and distributor of the window glass 10 for a vehicle, and product-related attributes, such as the constituents or functions of glass, but are not limited thereto.

In the semiconductor chip 43, various kinds of frequencies that are generally used, for example, radio waves of 135 kHz, 13.56 MHZ, 433 MHz, 869 MHz, 915 MHz, 2.45 GHz, etc. can be used. These radio waves have their respective characteristics. Accordingly, it is preferable to use the electronic tag 40 in a state according to the characteristic of a radio wave having each frequency. For example, since the radio wave of 869 MHz allows long-distance communication, it is easy to use the radio wave even in a situation where the electronic tag 40 and the reader are away from each other. Further, since the electronic tag 40 that uses the radio wave of 2.45 GHz can be made smaller, it is preferable to use the electronic tag 40 provided on the glass surface for an electronic tag that is not intended to be conspicuous.

Although this embodiment has been described in conjunction with the case in which the semiconductor chip 43 is a read-only chip, a semiconductor chip, such as EEPROM capable of both reading and writing, can also be used. In the case of the semiconductor chip capable of both reading and writing, diverse applications can be constructed by serially recording the information related to a vehicle body in a memory, reading the information recorded in the memory by using a reader, and storing the read information in a database. For example, an electronic vehicle inspection document, dealer's user management, repair situations, the vehicle history of vehicle owners, vehicle insurance management, and the like can be easily performed by using the electronic tag 40.

In this embodiment, the window glass 10 for a vehicle is interposed between the electronic tag 40 and the outside. Since this window glass 10 for a vehicle does not shield radio waves, the electronic tag 40 is communicable with the outside. Further, since the electronic tag 40 is located on the back side of the window frame 22 when viewed from the inside of the vehicle, the electronic tag is not directly seen from a passenger in the vehicle, and thus the appearance of the vehicle is not deteriorated.

### (Embodiment 2)

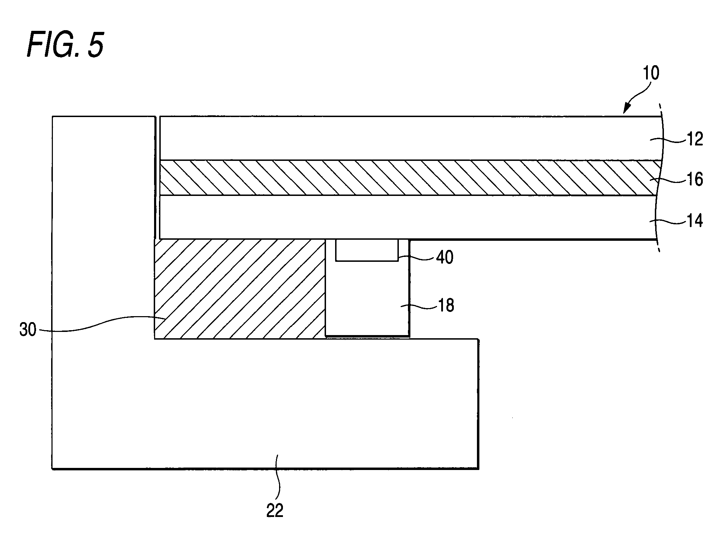

Fig. 5 is a sectional view showing the outline of a window glass for a vehicle according to Embodiment 2. As for the description of Embodiment 2, the description about the same configuration as Embodiment 1 will be omitted appropriately.

An electronic tag 40 of Embodiment 2 is bonded to the window glass 10 for a vehicle in a state where it is embedded in the holding member 18. In Embodiment 2, similar to Embodiment 1, the window glass 10 for a vehicle is interposed between the electronic tag 40 and the outside. Since this window glass 10 for a vehicle does not shield radio waves, the electronic tag 40 is communicable with the outside. Further, since the electronic tag 40 is located on the back side of the window frame 22 when viewed from the inside of the vehicle, the electronic tag is not directly seen from a passenger in the vehicle, and thus the appearance of the vehicle is not deteriorated.

In addition, the electronic tag 40 does not need to be bonded to the window glass 10 for a vehicle. For example, the electronic tag 40 may be in a state of being surrounded by the holding member 18. Further, the insulation film 41 may be embedded in the holding member 18 in a state of being exposed toward the window frame 22 so that the insulation film 41 can contact the window frame 22.

Further, the electronic tag may be bonded to the inner side face or outer side face of the holding member 18.

### (Embodiment 3)

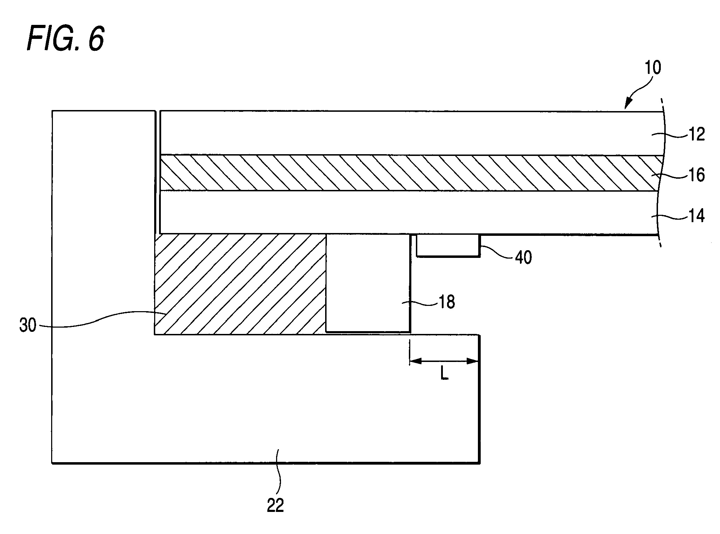

Fig. 6 is a sectional view showing the outline of a window glass for a vehicle according to Embodiment 3. As for the description of Embodiment 3, the description about the same configuration as Embodiment 1 will be omitted appropriately.

Embodiment 3 is a useful form in a case where the deviation amount L between the end of the window frame 22 inside the vehicle and the position of the holding member 18 is more than the length of the electronic tag 40 in the lateral direction thereof. The electronic tag 40 of Embodiment 3 is mounted on the vehicle interior surface of the window glass 10 for a vehicle further inside than the holding member 18. In Embodiment 3, similar to Embodiment 1, the window glass 10 for a vehicle is interposed between the electronic tag 40 and the outside. Since this window glass 10 for a vehicle does not shield radio waves, the electronic tag 40 is communicable with the outside. Further, since the electronic tag 40 is located on the back side of the window frame 22 when viewed from the inside of the vehicle, the electronic tag is not directly seen from a passenger in the vehicle, and thus the appearance of the vehicle is not deteriorated.

The present invention is not limited to the above-described respective embodiments, but modifications, such as various design changes, can be added on the basis of the knowledge of persons skilled in the art, and the embodiments to which such modifications are added are also included in the scope of the invention.

For example, in the above-described respective embodiments, since the electronic tag 40 is mounted on the window glass 10 for a vehicle or the holding member 18 that accompanies the window glass 10 for a vehicle, mounting of the electronic tag 40 is possible on the side of a manufacturer who manufactures the window glass 10 for a vehicle, but the invention is not limited thereto.

For example, the electronic tag 40 may be mounted on a joint region between the window glass 10 for a vehicle and the window frame 22 on the side of a vehicle manufacturer who purchases the window glass 10 for a vehicle and attaches it to the vehicle 20.

### (Modification 1)

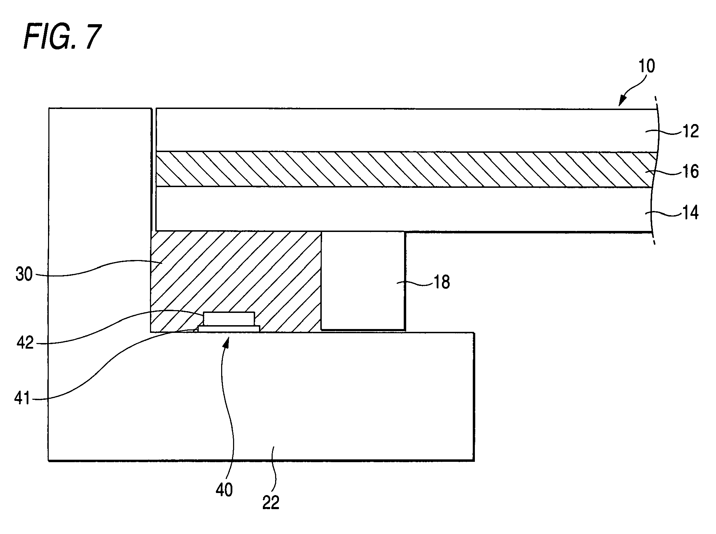

Fig. 7 is a sectional view showing the outline of a window glass for a vehicle according to Modification 1. In Modification 1, the electronic tag 40 is mounted in a state where the electronic tag is embedded in the adhesive 30, and the insulation film 41 touches the surface of the window frame 22 facing the window glass 10 for a vehicle. The electric insulation between the antenna 42 and semiconductor chip 43, and the window frame 22 is ensured by the insulation film 41. In this example, the window glass 10 for a vehicle and the adhesive 30 are interposed between the electronic tag 40 and the outside. Since this window glass 10 for a vehicle and the adhesive 30 do not shield radio waves, the electronic tag 40 is communicable with the outside. Further, since the electronic tag 40 is located on the back side of the window frame 22 when viewed from the inside of the vehicle, the electronic tag is not directly seen from a passenger in the vehicle, and thus the appearance of the vehicle is not deteriorated.

### (Modification 2)

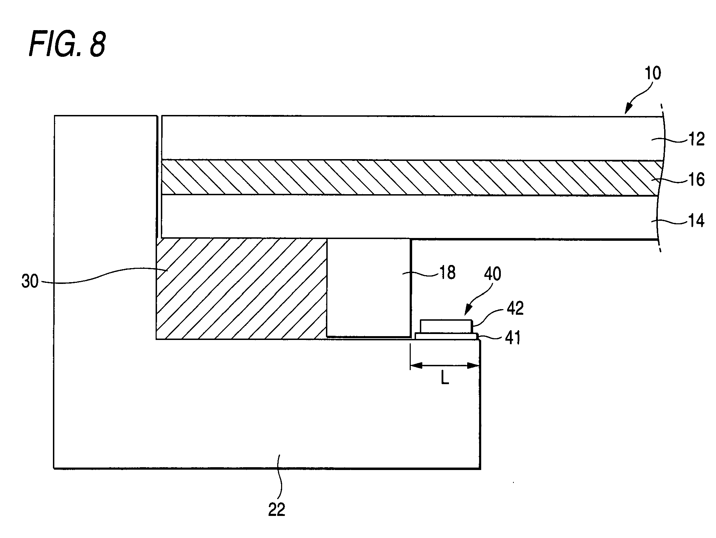

Fig. 8 is a sectional view showing the outline of a window glass for a vehicle according to Modification 2. Similar to Embodiment 3, Modification 2 is a useful form in a case where the deviation amount L between the end of the window frame 22 inside the vehicle and the position of the holding member 18 is more than the length of the electronic tag 40 in the lateral direction thereof. In Embodiment 2, the electronic tag 40 is mounted on the surface of the window frame 22 facing the window glass 10 for a vehicle further inside than the holding member 18. In this modification, the window glass 10 for a vehicle is interposed between the electronic tag 40 and the outside. Since this window glass 10 for a vehicle does not shield radio waves, the electronic tag 40 is communicable with the outside. Further, since the electronic tag 40 is located on the back side of the window frame 22 when viewed from the inside of the vehicle, the electronic tag is not directly seen from a passenger in the vehicle, and thus the appearance of the vehicle is not deteriorated.

Further, although the above-described respective embodiments illustrate that the window glass 10 for a vehicle is a shatterproof glass, the invention is limited thereto but the window glass 10 for a vehicle may be a single-layer tempered glass.

Further, although the above-described respective embodiments illustrate that the electronic tag is provided in an upper part of the front glass, the position where the electronic tag is provided is not limited thereto. For example, the electronic tag may be provided in a lower part or a side part of a front glass.

Further, the window glass for a vehicle is not limited to the front glass, but may be a rear glass and a roof glass.

## Claims

1. A window glass for a vehicle attached to a window frame of the vehicle with adhesive,
wherein an electronic tag is mounted on a joint region with the window frame.

2. A window glass for a vehicle according to Claim 1,
wherein the electronic tag is mounted in a region where the adhesive is provided.

3. A window glass for a vehicle according to Claim 1, further comprising a holding member that keeps a gap with the window frame at a predetermined distance,
wherein the electronic tag is mounted either in the holding member or on the side face thereof.

4. An attachment structure of an electronic tag comprising:
a window frame of a vehicle;
a window glass for a vehicle attached to the window frame;
adhesive that bonds the window frame and the window glass for a vehicle together; and
an electronic tag provided in a joint region between the window frame and the window glass for a vehicle.

5. An attachment structure of an electronic tag according to Claim 4,
wherein the electronic tag is provided in the adhesive.

6. An attachment structure of an electronic tag according to Claim 4, further comprising a holding member that keeps a gap between the window frame and the window glass for a vehicle at a predetermined distance,
wherein the electronic tag is provided either in the holding member, or on the side face thereof.
